(19) **Europäisches Patentamt**
**European Patent Office**
**Office européen des brevets**

(11) **EP 1 235 398 B1**

(12) **EUROPEAN PATENT SPECIFICATION**

(45) Date of publication and mention
of the grant of the patent:
**18.04.2007 Bulletin 2007/16**

(51) Int Cl.:
*H04L 25/02* (2006.01)          *H04L 27/26* (2006.01)

(21) Application number: **01400502.9**

(22) Date of filing: **27.02.2001**

(54) **Channel estimation in orthogonal frequency division multiplexed systems**

Kanalschätzung in Systemen mit orthogonalen Frequenzmultiplexsignalen

Estimation de canal dans des systèmes à répartition multiplexée de fréquences orthogonales

(84) Designated Contracting States:
**DE FR GB IT NL**

(43) Date of publication of application:
**28.08.2002 Bulletin 2002/35**

(73) Proprietor: **Freescale Semiconductor, Inc.**
**Austin,**
**Texas 78735 (US)**

(72) Inventors:
• **Muck, Markus**
**75013 Paris (FR)**
• **Courville, Marc de**
**75014 Paris (FR)**

(74) Representative: **Wharmby, Martin Angus**
**Freescale Semiconductor Inc.**
**c/o Impetus IP Limited**
**Grove House**
**Lutyens Close**
**Basingstoke, Hampshire RG24 8AG (GB)**

(56) References cited:
**EP-A- 1 047 233**

• **LEKE ET AL: "Effects of channel estimation errors on discrete multitone modulation (DMT) systems in a Rayleigh fading environment" ASILOMAR CONFERENCE ON SIGNALS, SYSTEMS AND COMPUTERS, 2 November 1997 (1997-11-02), pages 595-599, XP002135367 IEEE, NEW YORK, USA ISBN: 0-8186-8317-1**

EP 1 235 398 B1

## Description

This invention relates to communications using orthogonal frequency division multiplexing and has particular relevance to *Wireless Local Area Networks (WLANs)* such as, for example the ETSI standard BRAN HIPERLAN/2 and to IEEE802.11a (in the 5GHz band).

WLANs usually need a very precise estimation of the channel impulse response (CIR) which can be determined by the use of a training sequence.

In Orthogonal Frequency Division Multiplex (OFDM) systems, each OFDM symbol of size $N$ is usually preceded by a guard interval of $D$ samples which is longer than the memory of the channel impulse response (CIR). Assuming the CIR $\bar{c} = (c_0, c_1, ..., c_{M-1}, ..., c_{N-1})^t, c_M = c_{M+1} = ... = c_{N-1} = 0, D \geq M,$ being constant at least during the duration of one OFDM symbol, the *useful* OFDM symbol $\bar{s}(k) = (s_0(k), s_1(k), ..., s_{N-1}(k))^t$ is circularly convolved in time domain by the channel:

$$\bar{r}(k) = \bar{c} * \bar{s}(k) + \bar{b}(k) = \begin{pmatrix} c_0 & c_{N-1} & c_{N-2} & \cdots & c_1 \\ c_1 & c_0 & \ddots & \ddots & \vdots \\ \vdots & \ddots & \ddots & \ddots & c_{N-2} \\ c_{N-2} & \ddots & \ddots & \ddots & c_{N-1} \\ c_{N-1} & c_{N-2} & \cdots & c_1 & c_0 \end{pmatrix} \cdot \begin{pmatrix} s_0(k) \\ s_1(k) \\ \vdots \\ \vdots \\ s_{N-1}(k) \end{pmatrix} + \bar{b}(k).$$

$\bar{b}(k)$ is additive noise, $k$ is the OFDM symbol number and '*' is the convolution operator. The circular convolution in time domain corresponds to a multiplication of each carrier by a channel coefficient in frequency domain:

$$\bar{R}(k) = [C] \cdot \bar{S}(k) + \bar{B}(k) = \begin{pmatrix} C_0 & 0 & \cdots & 0 \\ 0 & C_1 & \cdots & 0 \\ \vdots & \ddots & \ddots & 0 \\ 0 & \cdots & 0 & C_{N-1} \end{pmatrix} \cdot \begin{pmatrix} S_0(k) \\ S_1(k) \\ \vdots \\ S_{N-1}(k) \end{pmatrix} + \bar{B}(k),$$

with

$$\bar{R}(k) = [F_N] \cdot \bar{r}(k),$$

$$\bar{S}(k) = [F_N] \cdot \bar{s}(k),$$

$$[C] = Diag([F_N] \cdot \bar{c}),$$

$$\bar{B}(k) = [F_N] \cdot \bar{b}(k)$$

and

$$[F_N] = \frac{1}{\sqrt{N}} \left( W_N^{lk} \right)_{0 \le l \le N-1, 0 \le k \le N-1},$$

$$W_N = e^{-j\frac{2\pi}{N}},$$

being the Fourier Transformation matrix.

A problem existing in OFDM systems is the estimation of the channel impulse response $[F_N] \cdot [F_N] \cdot \overline{c}$ in the receiver. Once this estimation is available, very simple equalization algorithms can be derived.

There are known ways of estimating the CIR. Usually, the transmitter sends a (short) training sequence, i.e. OFDM symbols known to both the transmitter and the receiver. From these symbols, the receiver estimates the channel coefficients. (See for example EBU Review Technical No. 224, August 1987, "Principles of modulation and channel coding for digital broadcasting for mobile receiver", by M. Alard and R. Lassalle.)

A typical OFDM frame structure consists of the training sequence followed by transmission parameters followed by the data. The transmission parameters are usually sent in a highly robust mode, for example, one using BPSK (binary phase shift keying) constellations. The data is usually sent in a less robust mode in order to achieve high data rates, eg. Quadrature amplitude modulation (QAM 64).

The quality of estimation of CIR using a training sequence mainly depends on the noise variance $\sigma_B^2$. As $\sigma_B^2$ increases, the accuracy of the estimated channel coefficients decreases rapidly and the resulting equalization leads to a poor system performance, e.g. a high bit error rate.

Other known methods of CIR estimation are based on the statistical characteristics of the received signal (see for example, EP-A-0987831). These methods are usually highly complex compared with the training sequence method and a large number of OFDM symbols is needed.

Other known alternatives are gradient-based methods for directly training a channel equalizer (mainly using a training sequence). (See for example, US-A-5,204,878) The disadvantage of these methods is the very low convergence speed.

There are also proposals for a CIR estimation refinement based on BPSK symbols (see 7th IEEE Intl. Symposium on Personal, Indoor and Mobile Radio Communications, Vol. 3, pp 1145-1149, 1996 "Channel Estimation Algorithms for DS/BPSK-CDMA Communications Systems" by Minh-Hung Bui, Hedayat Azad and A. Hamid Aghvami). The proposed solution discussed therein is based on a minimum mean square error (MSE) estimation in order to resolve the sign ambiguity of the estimated CIR. However, approximately two real multiplication and one real addition at the precision of the FFT (fast Fourier transform) outputs are required per carrier, thus adding to the complexity.

There is, currently, no blind or semi-blind CIR estimation method existing that is optimized for the common frame structure in OFDM systems and that is at the same time of a very low complexity.

This invention proposes a means for refining an estimation of the CIR thus improving the performance of the transmitter/receiver system.

According to a first aspect of the invention, there is provided receiving apparatus for deriving a channel impulse response (CIR) of a communications channel existing between the receiving apparatus and a remote transmitter, the receiving apparatus including;

means for receiving a signal comprising a training sequence and a symbol sequence, yn(k), comprising one or more OFDM, BPSK modulated symbols, of "*n*" OFDM carriers, "k" being an OFDM symbol number,

means for calculating a first, coarse estimate, He, of the CIR using the training sequence and for determining the sign of its real and imaginary parts, and characterised by

means for calculating a second estimate of the CIR composed of real and imaginary parts,

$$\left| \Re \left( H_n^{(refined)} \right) \right| = \frac{1}{P} \cdot \sum_{k=0}^{P-1} \left| \Re \left( y_n(k) \right) \right|, n \in (0, 1, ..., N-1),$$

$$\left|\Im\left(H_n^{(refined)}\right)\right| = \frac{1}{P} \cdot \sum_{.k=0}^{P-1} \left|\Im\left(y_n(k)\right)\right|, n \in \left(0,1,...,N-1\right).$$

where P is a pre-set number of received BPSK symbols,
and means for deriving a third, further refined estimate Hn (refined) of the CIR by correcting the second estimate with the signs of the real and imaginary parts of the first estimate.

According to a second aspect of the invention, there is provided a method for deriving a channel impulse response (CIR) of a communications channel existing between receiving apparatus and a transmitter, the method including the steps of;

receiving a signal comprising a training sequence and a symbol sequence, yn(k), comprising one or more OFDM, BPSK modulated symbols, of "*n*" OFDM carriers, "k" being an OFDM symbol number,

calculating a first, coarse estimate, He, of the CIR using the training sequence and determining the sign of its real and imaginary parts, and

characterised by

calculating a second estimate of the CIR composed of real and imaginary parts

$$\left|\Re\left(H_n^{(refined)}\right)\right| = \frac{1}{P} \cdot \sum_{k=0}^{P-1} \left|\Re\left(y_n(k)\right)\right|, n \in \left(0,1,...,N-1\right),$$

$$\left|\Im\left(H_n^{(refined)}\right)\right| = \frac{1}{P} \cdot \sum_{.k=0}^{P-1} \left|\Im\left(y_n(k)\right)\right|, n \in \left(0,1,...,N-1\right).$$

where P is a pre-set number of received BPSK symbols,
and deriving a third, further refined estimate Hn (refined) of the CIR by correcting the second estimate with the signs of the real and imaginary parts of the first estimate.

The invention exploits certain properties of the transmission frame that many WLANs have in common: In the header of the transmission frame (usually after the training sequence), important information concerning the frame composition is transmitted. This part of the frame (in HIPERLAN/2: BCH (Broadcast Channel), FCH (Frame Channel) and ACH (Access Feedback Channel)) usually uses the most robust constellation type, i.e. BPSK constellations. Knowing that BPSK constellations are used, the invention enables the receiver to greatly refine its estimation of the CIR.

Hence the invention provides a **blind** method allowing refinement of the estimation of the channel coefficients whenever **BPSK** (Binary Phase Shift Keying) constellations are used in order to modulate the data bits onto the carriers, e.g. $S_n(k) \in (1,-1) \forall n$. In a typical OFDM frame structure, the robust BPSK symbols are often used directly after the training sequence in order to transmit important system parameters.

Preferably, the estimation is refined with every incoming OFDM symbol. So, even the decoding of the BPSK symbols can be optimized.

The estimation of channel coefficients may be refined repeatedly until non-BPSK symbols are transmitted. From this point in time onwards, no further refinement is performed.

In one embodiment, the training sequence is repeated periodically and the refinement of the CIR estimate is further optimiized, by weighting a previous refined estimation and a latest refined estimation and combining the two.

In cases where the repetition rate of the training sequences is very low, BPSK symbols are inserted into the received signal from time to time in order to allow subsequent CIR refinements. Usually in OFDM systems, the transmitter can change the constellation type during a transmission. If BPSK symbols were to be inserted from time to time during a high-speed transmission phase (based on QAM-64 constellations, for example), this would assist CIR refinement within certain time intervals, particularly in a Doppler environment where the channel impulse response is time-variant.

The refinement procedure may be interrupted and restarted (eg. for the purposes of reducing power consumption) at any time without any detrimental effects.

The invention has the advantage of working blindly in that no knowledge of the data modulated onto the carriers is necessary for the refinement. The refinement method can be applied whenever BPSK constellations are used.

Further, the complexity of the method embodied in the invention is extremely low. Only very simple arithmetical operations are required.

The invention may be used in any digital communications system where a refinement of a CIR estimation is useful in order to obtain an improved BER/PER performance.

It is especially useful in the framework of Wireless LANs ETSI BRAN HIPERLAN/2 and IEEE802.11a, since the decoder requirements and the frame structure is designed such that the invention can provide a significant improvement in performance together with low-complexity and low power consumption.

The refinement method of the present invention shows, in simulation studies, very good results even after receiving only a few OFDM symbols. Approx. 20 OFDM symbols (min. number of OFDM symbols in the "transmission parameters" phase in BRAN HIPERLAN/2) are sufficient in order to gain a marked improvement in BER performance due to the refined CIR estimation. Alternative blind de-convolution methods based on the statistical properties of the received signals or gradient methods previously mentioned typically require several hundreds or even thousands of OFDM symbols until the estimation of the channel coefficients can be performed adequately.

Once the CIR has been determined in accordance with the invention, each BPSK symbol can be decoded.

Some embodiments of the invention will now be described, by way of example only, with reference to the drawing which is a schematic block diagram of receiving apparatus for estimating a channel impulse response in accordance with the invention.

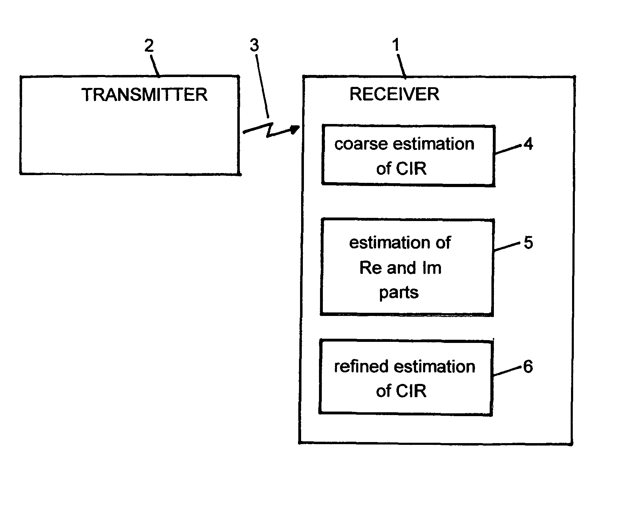

In Figure 1, a receiver 1 receives signals transmitted from a remote transmitter 2 over a radio channel 3 having an associated channel impulse response.

The signals transmitted comprise OFDM modulated signals composed of a training sequence followed by a BPSK modulated symbol sequence followed by a data sequence. These sequences are repeated periodically.

The signals transmitted are modified by the channel 3 and corrupted by noise as they pass from the transmitter 2 to the receiver 1.

In addition to the usual components of an OFDM receiver (not shown for the sake of clarity) the receiver 1 includes three modules 4, 5, 6. A first module 4 is configured to calculate a first estimate of the channel impulse response of the radio channel 3 and to determine the signs of its real and imaginary parts. This module 4 uses the training sequence to perform the necessary calculation and determination and operates in accordance with known procedures such as those disclosed in the aforementioned reference; EBU Technical Review.

A second module 5 calculates estimations of the absolute values of the real and imaginary parts of the channel impulse response using the BPSK symbol sequence.

A third module 6 produces a refined CIR estimate using the results obtained by the first and second modules 5, 6.

Operation of the embodiment of Figure 1 is as follows.

A first (rough) estimation $\vec{H}^{(e)} = \left( H_0^{(e)}, H_1^{(e)}, ..., H_{N-1}^{(e)} \right)^t$ of the (true) channel coefficients

$\vec{H}^{(exact)} = \left( H_0^{(exact)}, H_1^{(exact)}, ..., H_{N-1}^{(exact)} \right)^t$ for a $N$-carrier OFDM symbol is made by the first module 4, based on the learning sequence.

The blind refinement method is based on the fact, that a (normalized) BPSK symbol is usually created using the constellation points $x_n(k) \in (-1,1)$, with $n$ being the number of the OFDM carrier and $k$ being the OFDM symbol number. Assuming a channel with the channel coefficients $\vec{H}^{(exact)} = \left( H_0^{(exact)}, H_1^{(exact)}, ..., H_{N-1}^{(exact)} \right)^t$ and supposing that additive white Gaussian noise $v_n(k)$ is added on carrier $n$ of OFDM symbol number $k$, the received carrier amplitude of carrier $n$ of OFDM symbol number $k$ is

$$y_n(k) = H_n^{(exact)} \cdot x_n(k) + v_n(k).$$

The invention exploits the fact that

$$\left| \Re\left( y_n(k) \right) \right| + j \cdot \left| \Im\left( y_n(k) \right) \right| = \left| \Re\left( H_n^{(exact)} \right) \pm \Re\left( v_n(k) \right) \right| + j \cdot \left| \Im\left( H_n^{(exact)} \right) \pm \Im\left( v_n(k) \right) \right|,$$

since $|x_n(k)|=1$. Note that the $\pm$ sign ambiguities need not be resolved. After having accumulated $P$ BPSK-OFDM symbols, the absolute value of the real and imaginary part can be quite precisely determined (at least for big $P$ and for channel coefficients whose absolute real and imaginary parts are sufficiently large) by

$$\left|\Re\left(H_n^{(refined)}\right)\right| = \frac{1}{P} \cdot \sum_{k=0}^{P-1} \left|\Re\left(y_n(k)\right)\right|, n \in (0,1,...,N-1),$$

$$\left|\Im\left(H_n^{(refined)}\right)\right| = \frac{1}{P} \cdot \sum_{k=0}^{P-1} \left|\Im\left(y_n(k)\right)\right|, n \in (0,1,...,N-1).$$

$\Re(\cdot)$ determines the real part and $\Im(\cdot)$ determines the imaginary part of $(\cdot)$. Having estimated the absolute value of the real and imaginary part of the channel coefficients, the sign is taken from the original (rough) estimation

$$\vec{H}^{(e)} = \left(H_0^{(e)}, H_1^{(e)},...,H_{N-1}^{(e)}\right):$$

$$H_n^{(refined)} = sign\left(\Re\left(H_n^{(e)}\right)\right) \cdot \left|\Re\left(H_n^{(refined)}\right)\right| + j \cdot sign\left(\Im\left(H_n^{(e)}\right)\right) \cdot \left|\Im\left(H_n^{(refined)}\right)\right|.$$

Only sign inversions and additions are used for the refinement of the CIR estimation (besides one single normalization by $P$ in the last phase of the CIR refinement). In contrast to the known MSE method mentioned above, no multiplications are required.

In numerous cases, the invention allows a latency for decoding the received data. Assuming that a sufficiently large latency is tolerated, a receiver can optimize the bit-error-rate for received BPSK symbols in the following way: Firstly, by receiving (P) BPSK symbols and putting them into a buffer but not yet decoding the BPSK symbols. Next, by calculating the refined CIR and finally, applying the refined estimation of the CIR to the decoding of the buffered BPSK symbols. When no more BPSK symbols are transmitted, the refined estimation is kept and applied directly to decoding of the received symbols.

However, there might be cases where the required latency is not tolerated . This is the case for the HIPERLAN/2 standard. In this case, only a limited number ( say M) of BPSK-OFDM symbols can be stored in a buffer. The estimation of the channel impulse response can be refined using these BPSK-OFDM symbols (and preceding ones, if there are any). These *M* buffered symbols can then be decoded afterwards. Hence, in one embodiment, firstly, the coarse CIR is estimated from the training sequence. The first BPSK-OFDM symbol is received and stored in a buffer. The coarse CIR is then refined using the first BPSK symbol.(ie. P=1) Following this step, the first BPSK symbol can be decoded using the refined estimate of the CIR. The second received BPSK-OFDM symbol is then stored in the buffer. The coarse CIR estimate is refined a second time using the first and second received BPSK-OFDM symbols (ie. P=2). After this step, The second received BPSK-OFDM symbol is decoded using the second refined estimate, and so on.

In a second embodiment, the module 6 of Fig. 1 is arranged to combine two subsequent estimations in the following way:

$$H_n^{(refined)} = (1 - \lambda) \cdot H_n^{(latest)} + \lambda \cdot H_n^{(last)}, \lambda \in [0;1].$$

where $\lambda$ is defined as a "weighting factor"

Here BPSK symbols of a first sequence are used to refine a coarse estimation based on a first received training sequence. Then BPSK symbols of a subsequent sequence are used to refine a coarse estimation based on a second received training sequence. The two refined estimates (Hlast) and H(latest) are combined as in the above equation to give a new H(refined). The coarse estimation may be refined by either the BPSK sequence preceding it or the BPSK sequence following it.

Consider the situation where the channel impulse response is time-invariant (ie. the Doppler spread is negligible). In this case, a previous refined estimation of the channel impulse response is still valid and can be combined with a new refined estimation in order to further refine the result.

The *weighting factor* λ is in this example chosen to be : $\lambda = \dfrac{1}{2}$ : :

$$H_n^{(refined)} = \frac{1}{2} \cdot H_n^{(latest)} + \frac{1}{2} \cdot H_n^{(last)}.$$

In another situation, assume that the channel impulse response is *strongly* time-variant (ie. the Doppler spread is significant). In this case, a previous estimation of the channel impulse response is no longer valid (at least if it is *sufficiently old*) and the *combination factor* λ is here chosen to be λ = 0, ie. only the new estimation is taken into account:

$$H_n^{(refined)} = H_n^{(latest)}.$$

In a third situation, the channel impulse response is *slightly* time-variant (ie. the Doppler spread is neither large nor negligible). Here, a *weighting factor* λ must be chosen as a function of the time-variance:

$$H_n^{(refined)} = (1 - \lambda) \cdot H_n^{(latest)} + \lambda \cdot H_n^{(last)}, \lambda \in [0;1].$$

.

Simulations show that a significant gain can be achieved when the *weighting factor* λ is chosen accurately.

The adjustment of λ can accommodate the separation of training symbols and/or the OFDM-BPSK sequences in a frame and also severe Doppler effects and the like.

A third embodiment of the invention provides for refinement of the CIR estimation during a long transmission phase comprising data without any training sequence. In this example a training sequence precedes the long data transmission section and one or more BPSK symbols are inserted, periodically, into the long data transmission section rather than having a BPSK symbol sequence following the training sequence as in the first embodiment.

In this third embodiment, the module 6 periodically refines the original coarse estimate made from the training sequence using each BPSK symbol it receives. This periodic updating of the refined estimate is particularly useful in the presence of Doppler spread where the actual CIR is time-variant and the initial estimation becomes less and less accurate after each arriving symbol of the long transmission phase.

**Claims**

1. Receiving apparatus (1) for deriving a channel impulse response (CIR) of a communications channel (3) existing between the receiving apparatus (1) and a remote transmitter (2), the receiving apparatus (1) including;
means (1) for receiving a signal comprising a training sequence and a
symbol sequence, yn(k), comprising one or more orthogonal frequency
division multiplex (OFDM), binary phase shift keying (BPSK) modulated
symbols, of "*n*" OFDM carriers, "k" being an OFDM symbol number, means (4) for calculating a first, coarse estimate,
He, of the CIR using the
training sequence and for determining the sign of its real and imaginary
parts, and **characterised by**
means (5) for calculating a second estimate of the CIR composed of real
and imaginary parts,

$$\left| \Re \left( H_n^{(refined)} \right) \right| = \frac{1}{P} \cdot \sum_{k=0}^{P-1} \left| \Re \left( y_n(k) \right) \right|, n \in (0,1,\dots,N-1),$$

$$\left|\Im\left(H_n^{(refined)}\right)\right| = \frac{1}{P} \cdot \sum_{k=0}^{P-1}\left|\Im\left(y_n(k)\right)\right|, n \in (0,1,...,N-1).$$

where P is a pre-set number of received BPSK symbols, and means (6) for deriving a third, further refined estimate, Hn (refined), of the CIR by correcting the second estimate with the signs of the real and imaginary parts of the first estimate.

2. A method for deriving a channel impulse response (CIR) of a communications channel (3) existing between receiving apparatus (1) and a transmitter (2), the method including the steps of:

receiving a signal comprising a training sequence and a symbol sequence,
yn(k), comprising one or more orthogonal frequency division multiplex,
binary phase shift keying (OFDM,BPSK) modulated symbols of "*n*" OFDM carriers, "k" being an OFDM symbol number,
calculating a first coarse estimate, He of the CIR using the training sequence and determining the sign of its real and imaginary parts, and
**characterised by**
calculating a second estimate of the CIR composed of real and imaginary parts,

$$\left|\Re\left(H_n^{(refined)}\right)\right| = \frac{1}{P} \cdot \sum_{.k=0}^{P-1}\left|\Re\left(y_n(k)\right)\right|, n \in (0,1,...,N-1),$$

$$\left|\Im\left(H_n^{(refined)}\right)\right| = \frac{1}{P} \cdot \sum_{k=0}^{P-1}\left|\Im\left(y_n(k)\right)\right|, n \in (0,1,...,N-1).$$

where P is a pre-set number of received BPSK symbols,
and deriving a third, further refined estimate, Hn (refined), of the CIR by
correcting the second estimate with the signs of the real and imaginary
parts of the first estimate.

3. A method according to Claim 2 and including the further step of combining a weighted further refined CIR estimate with a weighted previous further refined CIR estimate.

4. A method according to Claim 3 wherein the further refined CIR estimate and the previous further refined CIR estimate are both weighted by a factor of ½.

5. A method according to Claim 3 wherein the further refined CIR estimate is weighted by a factor of 1 and the previous further refined estimate is weighted by a factor of 0.

6. A method according to Claim 3 wherein a weighting factor, $\lambda$, for the refined CIR estimate and for the previous further refined CIR estimate is chosen according to the time variance of the channel (3).

7. A method according to Claim 2 in which the step for deriving a third, further refined estimate of the CIR is performed for each received OFDM BPSK symbol received.

**Patentansprüche**

1. Empfangsgerät (1) zum Ableiten einer Kanalimpulsantwort (CIR) eines zwischen dem Empfangsgerät (1) und einem entfernten Sender (2) bestehendem Kommunikationskanals (3), der, wobei das Empfangsgerät (1) enthält:

   Mittel (1) zum Empfangen eines Signals, umfassend eine Trainingssequenz und eine Symbolsequenz, yn(k), umfassend ein oder mehrere Orthogonalfrequenzmultiplex- (OFDM-), Binärphasenverschiebungscodierungs- (BPSK-) modulierte Symbole von "n" OFDM-Trägern, wobei "k" eine OFDM-Symbolnummer ist,
   Mittel (4) zum Berechnen einer ersten, groben Abschätzung, He, der CIR unter Verwendung der Trainingssequenz und zum Bestimmen des Vorzeichens ihrer Real- und Imaginärteile, und **gekennzeichnet durch**
   Mittel zum Berechnen einer zweiten Abschätzung der CIR, zusammengesetzt aus Real- und Imaginärteilen,

$$\left|\Re\left(H_n^{(refined)}\right)\right| = \frac{1}{P} \cdot \sum_{k=0}^{P-1} \left|\Re\left(y_n(k)\right)\right|, n \in (0,1,...,N-1),$$

$$\left|\Im\left(H_n^{(refined)}\right)\right| = \frac{1}{P} \cdot \sum_{k=0}^{P-1} \left|\Im\left(y_n(k)\right)\right|, n \in (0,1,...,N-1).$$

   wobei P eine voreingestellte Anzahl von empfangenen, BPSK-Symbolen ist, und
   Mittel (6) zum Ableiten einer dritten, weiter verfeinerten Abschätzung, Hn(refined), der CIR **durch** Korrigieren der zweiten Abschätzung mit den Vorzeichen der Real- und Imaginärteile der ersten Abschätzung.

2. Verfahren zum Ableiten einer Kanalimpulsantwort (CIR) eines zwischen einem Empfangsgerät (1) und einem Sender (2) bestehenden Kommunikationskanals (3), wobei das Verfahren die Schritte enthält:

   Empfangen eines Signals, umfassend eine Trainingssequenz und eine Symbolsequenz, yn(k), umfassend ein oder mehrere Orthogonalfrequenzmultiplex-, Binärphasenverschiebungscodierungs- (OFDM-, BPSK-) modulierte Symbole von "n" OFDM-Trägern, wobei "k" eine OFDM-Symbolnummer ist,
   Berechnen einer ersten groben Abschätzung, He, der CIR unter Verwendung der Trainingssequenz und Bestimmen des Vorzeichens ihrer Real- und Imaginärteile und
   **gekennzeichnet durch**
   Berechnen einer zweiten Abschätzung der CIR, zusammengesetzt aus Real- und Imaginärteilen,

$$\left|\Re\left(H_n^{(refined)}\right)\right| = \frac{1}{P} \cdot \sum_{k=0}^{P-1} \left|\Re\left(y_n(k)\right)\right|, n \in (0,1,...,N-1),$$

$$\left|\Im\left(H_n^{(refined)}\right)\right| = \frac{1}{P} \cdot \sum_{k=0}^{P-1} \left|\Im\left(y_n(k)\right)\right|, n \in (0,1,...,N-1).$$

   wobei P eine voreingestellte Anzahl von empfangenen BPSK-Symbolen ist, und
   Ableiten einer dritten, weiter verfeinerten Abschätzung, Hn(refined), der CIR **durch** Korrigieren der zweiten Abschätzung mit den Vorzeichen der Real- und Imaginärteile der ersten Abschätzung.

3. Verfahren nach Anspruch 2 und enthaltend
   den weiteren Schritt des Kombinierens einer gewichteten weiter verfeinerten CIR-Abschätzung mit einer gewichteten, vorangehenden, weiter verfeinerten CIR-Abschätzung.

**4.** Verfahren gemäß Anspruch 3, wobei die weiter verfeinerte CIR-Abschätzung und die vorangehende weiter verfeinerte CIR-Abschätzung beide mit einem Faktor ½ gewichtet werden.

**5.** Verfahren gemäß Anspruch 3, wobei die weiter verfeinerte CIR-Abschätzung mit einem Faktor 1 gewichtet wird und die vorangehende weiter verfeinerte Abschätzung mit einem Faktor 0 gewichtet wird.

**6.** Verfahren gemäß Anspruch 3, wobei ein Wichtungsfaktor λ, für die verfeinerte CIR-Abschätzung und für die vorangehende weiter verfeinerte CIR-Abschätzung gemäß der Zeitvarianz des Kanals (3) gewählt wird.

**7.** Verfahren gemäß Anspruch 2, wobei der Schritt des Ableitens einer dritten weiter verfeinerten Abschätzung der CIR für jedes empfangene OFDM-BPSK-Symbol durchgeführt wird.

## Revendications

**1.** Appareil de réception (1) pour dériver une réponse impulsionnelle de canal (CIR) d'un canal de communication (3) qui existe entre l'appareil de réception (1) et un émetteur à distance (2), l'appareil de réception (1) incluant :

un moyen (1) pour recevoir un signal comprenant une séquence d'apprentissage et une séquence de symboles, soit yn(k), comprenant un ou plusieurs symboles modulés par déplacement de phase binaire (BPSK) à multiplexage par répartition en fréquences orthogonales (OFDM) de "n" porteuses OFDM, "k" étant un nombre de symboles OFDM,
un moyen (4) pour calculer une première estimation grossière, soit He, de la CIR en utilisant la séquence d'apprentissage et pour déterminer le signe de ses parties réelle et imaginaire et **caractérisé par**:

un moyen (5) pour calculer une seconde estimation de la CIR qui est constituée par des parties réelle et imaginaire,

$$\left|\Re(H_n^{(refined)})\right| = \frac{1}{P} \cdot \sum_{k=0}^{P-1} \left|\Re(y_n(k))\right|, \ n \in (0,1,...,N-1),$$

$$\left|\Im(H_n^{(refined)})\right| = \frac{1}{P} \cdot \sum_{k=0}^{P-1} \left|\Im(y_n(k))\right|, \ n \in (0,1,...,N-1),$$

où P est un nombre préétabli de symboles BPSK reçus et un moyen (6) pour dériver une troisième estimation davantage affinée, soit Hn (refined), de la CIR en corrigeant la seconde estimation avec les signes des parties réelle et imaginaire de la première estimation.

**2.** Procédé pour dériver une réponse impulsionnelle de canal (CIR) d'un canal de communication (3) qui existe entre un appareil de réception (1) et un émetteur (2), le procédé incluant les étapes de :

réception d'un signal qui comprend une séquence d'apprentissage et une séquence de symboles, soit yn(k), comprenant un ou plusieurs symboles modulés par déplacement de phase binaire à multiplexage par répartition en fréquences orthogonales (OFDM, BPSK) de "n" porteuses OFDM, "k" étant un nombre de symboles OFDM, calcul d'une première estimation grossière, soit He, de la CIR en utilisant la séquence d'apprentissage et détermination du signe de ses parties réelle et imaginaire et **caractérisé par** :

le calcul d'une seconde estimation de la CIR qui est constituée par des parties réelle et imaginaire,

$$\left|\Re(H_n^{(\text{refined})})\right| = \frac{1}{P}\cdot\sum_{k=0}^{P-1}\left|\Re(y_n(k))\right|, \ n \in (0,1,...,N-1),$$

$$\left|\Im(H_n^{(\text{refined})})\right| = \frac{1}{P}\cdot\sum_{k=0}^{P-1}\left|\Im(y_n(k))\right|, \ n \in (0,1,...,N-1),$$

où P est un nombre préétabli de symboles BPSK reçus et la dérivation d'une troisième estimation davantage affinée, soit Hn (refined), de la CIR en corrigeant la seconde estimation avec les signes des parties réelle et imaginaire de la première estimation.

3. Procédé selon la revendication 2 et incluant l'étape supplémentaire de combinaison d'une estimation de CIR davantage affinée pondérée avec une estimation de CIR davantage affinée pondérée précédente.

4. Procédé selon la revendication 3, dans lequel l'estimation de CIR davantage affinée et l'estimation de CIR davantage affinée précédente sont toutes deux pondérées au moyen d'un facteur de 1/2.

5. Procédé selon la revendication 3, dans lequel l'estimation de CIR davantage affinée est pondérée au moyen d'un facteur de 1 et l'estimation davantage affinée précédente est pondérée au moyen d'un facteur de 0.

6. Procédé selon la revendication 3, dans lequel un facteur de pondération, soit $\lambda$, pour l'estimation de CIR affinée et pour l'estimation de CIR davantage affinée précédente est choisi conformément à la variance temporelle du canal (3).

7. Procédé selon la revendication 2, dans lequel l'étape pour dériver une troisième estimation davantage affinée de la CIR est réalisée pour chaque symbole OFDM BPSK reçu.